# EUROPEAN PATENT SPECIFICATION

(11) **EP 3 059 149 B1**
(45) Date of publication and mention of the grant of the patent: **05.12.2018**
(21) Application number: 16155380.5
(22) Date of filing: 12.02.2016
(51) Int. Cl.: B62J 17/04, B62J 17/02

(54) **FRONT STRUCTURE OF STRADDLE-TYPE VEHICLE**
VORDERSTRUKTUR EINES GRÄTSCHSITZFAHRZEUGS
STRUCTURE AVANT DE VÉHICULE DE TYPE À ENFOURCHER

(30) Priority: 18.02.2015 JP 2015029991
(43) Date of publication of application: 24.08.2016
(73) Proprietor: HONDA MOTOR CO., LTD., Tokyo 107-8556 (JP)
(72) Inventor: UCHIDA, Soya, Saitama, Saitama 351-0193 (JP); MAEDA, Rui, Saitama, Saitama 351-0193 (JP); YAMADA, Masaomi, Saitama, Saitama 351-0193 (JP); KOYANO, Koji, Saitama, Saitama 351-0193 (JP); OHASHI, Yasuhiro, Saitama, Saitama 351-0193 (JP); SASAZAWA, Hiroyuki, Saitama, Saitama 351-0193 (JP); MIZUTA, Koji, Saitama, Saitama 351-0193 (JP); FUJIMOTO, Yukitou, Saitama, Saitama 351-0193 (JP)
(74) Representative: Fioravanti, Corrado

(56) References cited:
- EP-A1- 2 447 141
- EP-A1- 3 002 190
- WO-A1-2008/082357
- AU-A- 8 412 282
- DE-A1- 10 230 915
- JP-A- H1 035 563
- JP-A- 2010 070 107
- JP-A- 2012 061 953

## Description

The present invention relates to a front structure for a straddle-type vehicle of the kind defined in the preamble of claim 1.

Such a front structure is disclosed in EP 2 447 141 A.

Some of straddle-type vehicles such as motorcycles are equipped with a shield (also referred to as a windshield). Some of the shields of this kind are formed in a shape that forms a part of the shape of a fundamental curved surface of a front cowl constituting a cover covering a front part of a vehicle body, and have a protrusion surface formed at an upper position of the shield and having the shape of a curved surface different from that of the fundamental curved surface (see Japanese Patent Application Publication No. Hei 5-201368, for example).

However, the above conventional technique intends to streamline the flow of air from a front surface of the shield to an upper surface of a helmet during traveling by applying it to a vehicle in which a front cowl and a shield are formed in a continuous shape, e.g., a racing vehicle having a small frontal projected area.

Meanwhile, motorcycles also include a vehicle in which a shield stands more upright than a front cowl by placing the shield on an upper part of the front cowl with a clearance between them at the front, e.g., a tourer vehicle. Even for such a vehicle, there has been a demand for further improvement in aerodynamic characteristics, and a further reduction in wind noise has also been requested recently.

The present invention has been made in view of the aforementioned circumstances and aims at providing an improved front structure for a straddle-type vehicle enabling suppression of wind noise while having a configuration where a shield is provided on an upper part of a front cowl with a clearance between them.

This aim is achieved according to the invention by a front structure having the features defined in claim 1.

Such a front structure of a straddle-type vehicle includes a cover covering a front part of a vehicle body and a shield provided on an upper part of the cover with a clearance therebetween, the shield is formed along a fundamental curved surface (61W) that causes a wind during traveling to flow to the left and right of the vehicle body, and recess portions being recessed from the fundamental curved surface (61W) are arranged at left and right parts of the shield (61).

Further, in the above configuration, the structure is configured so that the meter stay (101) is located behind the shield opening (61Y), and an upper surface of the meter stay (101) is formed in a shape that causes a wind having flowed through the shield opening (61Y) to flow upward.

Further, in the above configuration, the structure is configured so that stay-side openings (61Z) to cause a wind having flowed through the shield opening (61Y) to flow to the left and right are arranged at left and right parts of the meter stay (101).

In the above configuration, the structure is configured so that the shield (61) is provided with a narrow portion (61S) where the shield is narrowed in a vehicle width-wise direction by notch portions (61A) formed by notching the shield inward in the vehicle width-wise direction, and the recess portions (61X) are located above the notch portions (61A).

Further, in the above configuration, the structure is configured so that the shield (61) has a shield opening (61Y) being open at a vehicle width-wise centre in the narrow portion (61S).

Further, in the above configuration, the structure is configured so that the shield (61) is supported by a meter stay (101) supporting a meter (110), and the meter stay (101) integrally includes a meter visor (106) covering the meter (110) from above.

According to the present invention, the shield provided on the upper part of the cover, covering the front part of the vehicle body, with a clearance therebetween is formed along the fundamental curved surface that causes a wind during traveling to flow to the left and right of the vehicle body, and the recess portions being recessed from the fundamental curved surface are arranged at the left and right parts of the shield. This makes it possible to reduce the joining of upper and lower traveling winds that are located at the left and right parts of the shield and different in flow velocity, and thereby facilitates suppression of wind noise.

Further, the shield is provided with the narrow portion where the shield is narrowed in the vehicle width-wise direction by the notch portions formed by notching the shield inward in the vehicle width-wise direction, and the recess portions are located above the notch portions. This makes it possible to reduce the joining of upper and lower traveling winds that are located at the left and right of the notch portions and different in flow velocity, and thereby facilitates suppression of wind noise at a relatively high position.

Further, the shield has the shield opening being open at the vehicle width-wise centre in the narrow portion. Thereby, the air volume of a traveling wind to flow to the left and right in the narrow portion is reduced and the joining of the traveling winds can be further suppressed accordingly, which facilitates suppression of wind noise. Besides, this reduces a gap in flow velocity between a traveling wind flowing above the shield and a traveling wind flowing upward along a front surface of the shield, and thereby facilitates a reduction of the power of wind blowing against an occupant.

Further, the shield is supported by the meter stay supporting the meter, and the meter stay integrally includes the meter visor covering the meter from above. Thereby, the function to support the meter, the function as the meter visor, and the function to support the shield are implemented by a single component, enabling a reduction in the number of components.

Further, the meter stay is located behind the shield opening, and the upper surface of the meter stay is formed in a shape that causes a wind having flowed through the shield opening to flow upward. Thereby, the effect of pushing upward the traveling wind flowing above the shield can be further enhanced, achieving the same windbreak effect as a taller shield.

Further, the stay-side openings to cause a wind having flowed through the shield opening to flow to the left and right are arranged at the left and right parts of the meter stay.

Thereby, the power of wind blowing against the arms of an occupant and the like can be reduced and turning performance is enhanced. Owing to these, it is possible to maintain turning performance while achieving the same windbreak effect as a taller shield.

Further features and advantages of the invention will become apparent from the following description and the accompanying drawings, wherein:
Fig. 1 is a right-side view of a motorcycle according to an embodiment of the present invention;
Fig. 2 is a right-side view of a front part of the motorcycle;
Figs. 3A and 3B are each a view of a shield and its peripheral configuration viewed from the front side of a vehicle body, in which Fig. 3A is a view illustrating a shield of the present configuration and Fig. 3B is a view illustrating a shield according to a reference example;
Figs. 4A and 4B are each a sectional view of the shield, in which Fig. 4A is a sectional view taken along a line IV-IV in Fig. 3A and Fig. 4B is an enlarged view of a cross section of a shield recess portion;
Fig. 5 is a perspective view in which the shield and its peripheral configuration are viewed from the front right side;
Fig. 6 is a sectional side view illustrating the shield and its peripheral configuration; and
Fig. 7 is a view of a stay member and its peripheral configuration viewed from the upper side.

Hereinbelow, an embodiment of the present invention will be described with reference to the drawings. Note that, directions such as front, rear, left, right, up, and down in the following description are the same as those in a vehicle body unless otherwise stated. In addition, in each drawing, reference sign FR indicates the front side of the vehicle body, reference sign UP indicates the upper side of the vehicle body, and reference sign LH indicates the left side of the vehicle body.

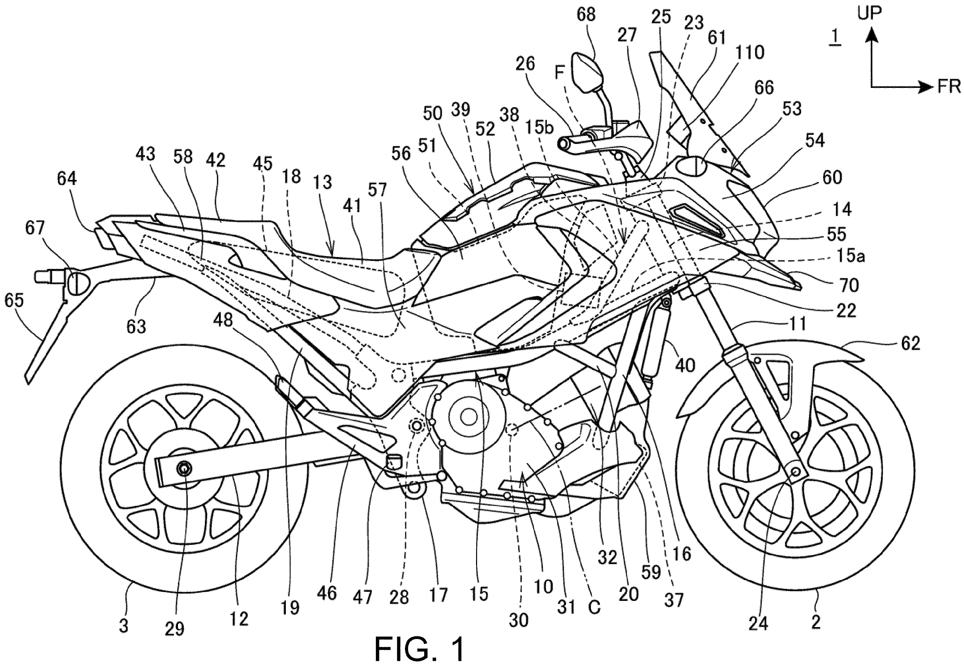

Fig. 1 is a right-side view of a motorcycle according to an embodiment of the present invention. Note that, as to parts provided as a left and right pair, only a right-side part is illustrated in Fig. 1.

A motorcycle 1 is a vehicle in which: an engine 10 as a power unit is supported on a body frame F; a pair of left and right front forks 11, 11 supporting a front wheel 2 is steerably supported on a front end of the body frame F; and a swing arm 12 supporting a rear wheel 3 is provided on a rear side of the body frame F. The motorcycle 1 is a straddle-type vehicle in which a seat 13 that an occupant straddles and sits on is provided above a rear part of the body frame F.

The body frame F includes: a head pipe 14 provided at its front end; a pair of left and right main frames 15, 15 extending downward toward the rear from a lower part of the head pipe 14; a pair of left and right down frames 16, 16 extending rearward and downward from front end parts of the main frames 15, 15 respectively; a pair of left and right pivot frames 17, 17 extending downward from rear ends of the main frames 15, 15 respectively; a pair of left and right seat frames 18, 18 extending upward toward the rear respectively from upper ends of the pivot frames 17, 17 to a rear end part of the vehicle; and a pair of left and right subframes 19, 19 extending upward toward the rear from upper parts of the pivot frames 17, 17 to be connected to rear parts of the seat frames 18, 18 respectively.

Each main frame 15 includes: a main frame body portion 15a extending downward toward the rear from the lower part of the head pipe 14 with a relatively gentle slope; and a reinforcement frame portion 15b connecting an upper part of the head pipe 14 and an intermediate part of the main frame body portion 15a. In addition, the body frame F includes a pair of left and right connection frames 20, 20 connecting intermediate parts of the main frame body portions 15a, 15a and the down frames 16, 16 respectively.

A steering shaft (not illustrated) is turnably and axially supported on the head pipe 14, and a bottom bridge 22 and a top bridge 23 extending in a vehicle width-wise direction are respectively fixed at a lower end part and an upper and part of the steering shaft. The front forks 11, 11 are supported by the bottom bridge 22 and the top bridge 23, and the front wheel 2 is axially supported on a front-wheel axle 24 provided at lower ends of the front forks 11, 11. The top bridge 23 includes a handlebar holder 25 extending upward from its upper surface, and a steering handlebar 26 extending in the vehicle width-wise direction is supported on the handlebar holder 25. Knuckle guards 27, 27, rear-view mirrors 68, 68, and the like are attached to the handlebar 26.

The swing arm 12 is axially supported at its front end part by a pivot shaft 28 connecting the left and right pivot frames 17, 17, and is swung vertically about the pivot shaft 28. The rear wheel 3 is axially supported on a rear-wheel axle 29 inserted in a rear end part of the swing arm 12.

A rear suspension (not illustrated) is provided between the swing arm 12 and the body frame F.

The engine 10 includes: a crankcase 31 supporting a crankshaft 30 extending in the vehicle width-wise direction; and a cylinder portion 32 extending forward and upward from a front part of the crankcase 31. The engine 10 is an engine tilting forward so that a cylinder axis C of the cylinder portion 32 may become closer to horizontal than vertical, and a component arranging space is secured above the engine 10. The power from the engine 10 is transmitted to the rear wheel 3 via a chain (not illustrated) provided between an output shaft (not illustrated) of the engine 10 and the rear wheel 3. Note that, in Fig. 1, reference numeral 37 indicates a catalytic converter.

An air cleaner box 38 is connected to a back surface of the cylinder portion 32 with a throttle body (not illustrated) between them. The air cleaner box 38 is disposed above the cylinder portion 32 by being disposed above front parts of the main frames 15, 15 and behind the head pipe 14. The air cleaner box 38 is configured to take in fresh air using the intake pressure of the engine 10 and clean the air with its inside filter. The air cleaned in the air cleaner box 38 is flowed downward toward the cylinder portion 32 by the intake pressure of the engine 10, and its flow rate is adjusted by the throttle body before being fed to the cylinder portion 32.

In addition, a battery 39 to supply power to each part of the vehicle body is disposed between the air cleaner box 38 and the pair of main frame body portions 15a. The engine 10 is a water-cooled engine, and a radiator 40 to air-cool the cooling water of the engine 10 is disposed below the head pipe 14 and ahead of the cylinder portion 32.

The seat 13 includes: a front seat 41 for the rider; and a rear seat 42 for a passenger one step higher than the front seat 41. The front seat 41 is disposed above the pivot frames 17, 17 and front parts of the seat frames 18, 18, and the rear seat 42 is disposed above the seat frames 18, 18. Grips 43, 43 for the passenger sitting on the rear seat 42 to grip are arranged at left and right sides of the rear seat 42 respectively.

A fuel tank 45 is disposed using a space below the front seat 41 and the rear seat 42 and between the seat frames 18, 18.

A pair of left and right step holders 46, 46 is arranged outside the pivot frames 17, 17 in the vehicle width-wise direction, steps 47, 47 for the rider are fixed at front parts of the respective left and right step holders 46, 46, and tandem steps 48, 48 for the passenger are fixed at rear parts of the respective left and right step holders 46, 46.

A storage box 50 is provided above a rear part of the main frames 15, 15 at a position between the front seat 41 and the head pipe 14. The storage box 50 includes: a box body 51 having an opening in its upper surface; and a box lid 52 to openably and closably cover the opening in the upper surface.

The box body 51 has a capacity that can accommodate one full-face helmet. The air cleaner box 38 and the battery 39 are disposed between the box body 51 and the head pipe 14.

The motorcycle 1 includes a resin-made body cover 53 covering the vehicle body. The body cover 53 includes: a front cowl 54 being a cover covering a front part of the vehicle body; a pair of left and right side covers 55, 55 covering lateral sides of the front part of the vehicle body; a pair of left and right box side covers 56, 56 covering the box body 51; a pair of left and right middle covers 57, 57 covering lateral sides of a part of the vehicle body behind the side covers 55, 55; and a rear cowl 58 covering a rear part of the vehicle body behind the middle covers 57, 57.

The front cowl 54 is disposed ahead of the head pipe 14, and a headlight 60, a shield 61 (also referred to as a windshield), and a pair of left and right front indicators 66, 66 are attached to the front cowl 54. The side covers 55, 55 are attached to left and right parts of the front cowl 54 and laterally cover the head pipe 14 and the front parts of the main frames 15, 15.

The box side covers 56, 56 are disposed between the pair of side covers 55, 55 and the front seat 41 and laterally cover an upper part of the box body 51. The box side covers 56, 56 also serve as rider's knee grip portions. The middle covers 57, 57 are attached to the body frame F and, above the main frames 15, 15, cover a lower part of the box body 51 and a part below the front seat 41. The rear cowl 58 is attached to the seat frames 18, 18, and covers the seat frames 18, 18 and the subframes 19, 19 below the rear seat 42. A pair of taillights 64 is arranged at a rear end part of the rear cowl 58.

As the body cover 53, the motorcycle 1 further includes: an undercover 59 covering the engine 10 from below; a front fender 62 covering an upper part of the front wheel 2; a rear fender 63 being provided above the rear wheel 3 and covering the fuel tank 45 from below; and a beaky cowl 70 projecting downward toward the front like a beak from a part below the front cowl 54. To the rear fender 63, the pair of left and right taillights 64, a license plate holder 65, and a pair of rear indicators 67, 67 are attached. The beaky cowl 70 is formed so as to taper toward its front end both in a vertical direction and in the vehicle width-wise direction.

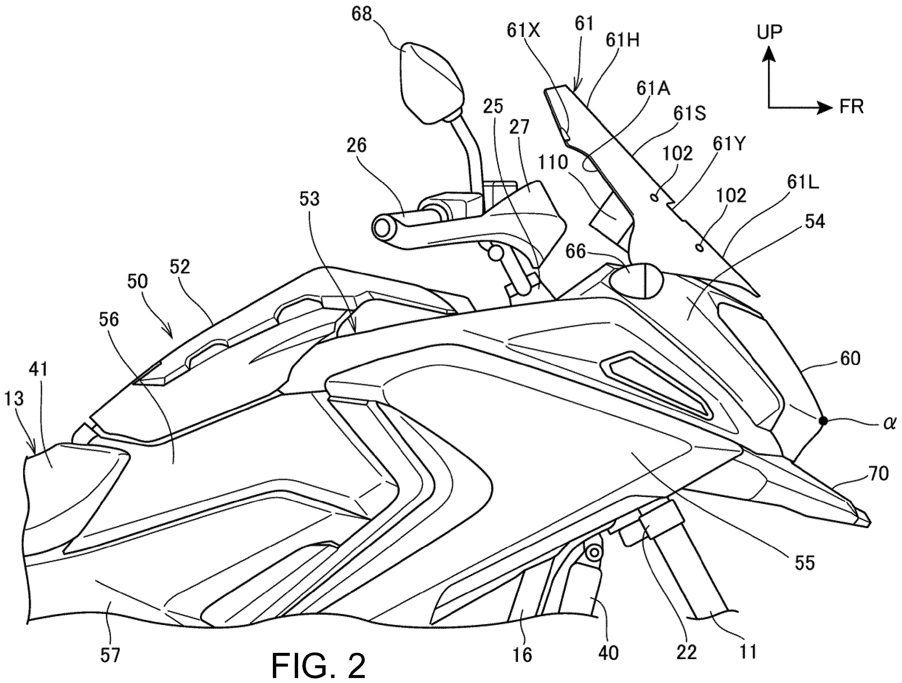

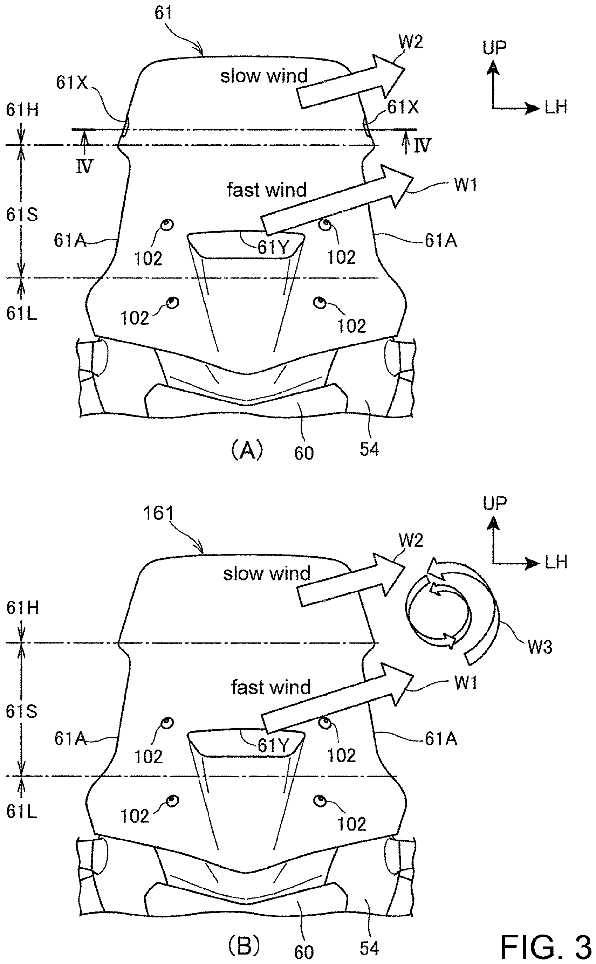

Fig. 2 is a right-side view of a front part of the motorcycle 1. Fig. 3A is a view of the shield 61 and its peripheral configuration viewed from the front side of the vehicle body.

The front cowl 54 is supported through a bracket (not illustrated) by the head pipe 14 constituting a front part of the body frame F and, as illustrated in Fig. 2 and Fig. 3A, is formed as a cover that covers, from front, the front part of the vehicle body at a position ahead of the head pipe 14 and below the handlebar 26.

A front surface of the front cowl 54 is formed in a fundamental curved surface that causes a traveling wind from the front side to flow smoothly. When a front end position (indicated by reference sign α in Fig. 2) set at the vehicle width-wise centre is used as a reference position, the fundamental curved surface is made as a forward-protruding curved surface that diverges away from the reference position vertically and horizontally toward the rear. The front end position α coincides with a front end of the headlight 60, and the front surface of the front cowl 54 including a front surface of the headlight 60 is formed in the fundamental curved surface. In other words, the headlight 60 is embedded in the front cowl 54 so as to constitute a part of the front surface of the front cowl 54, so that the fundamental curved surface is formed by the headlight 60 and the front cowl 54.

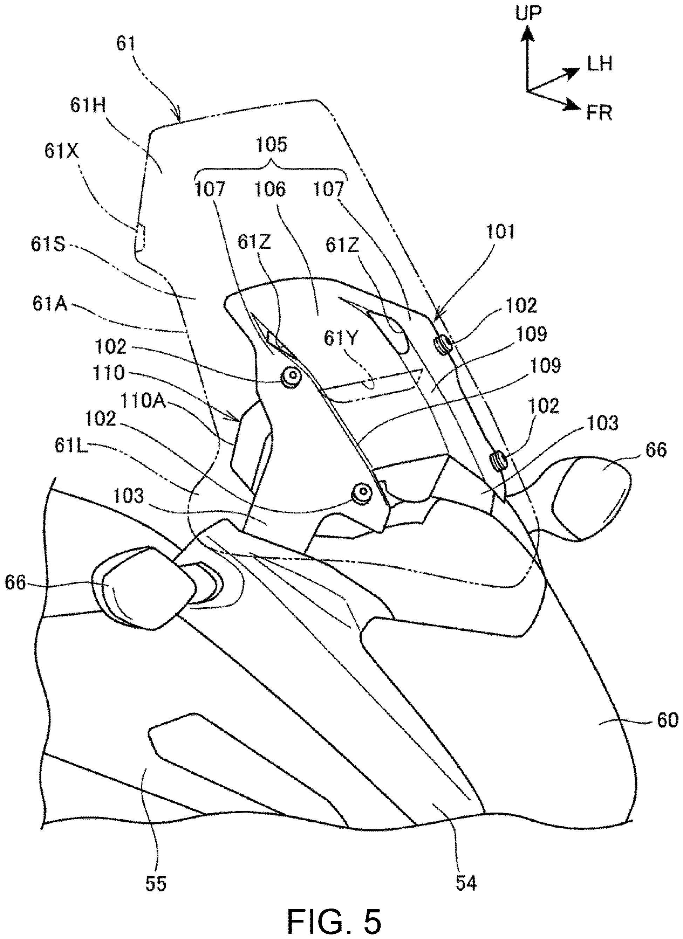

The shield 61 is attached to an upper part of the front cowl 54 through a stay member 101 to be described later (Fig. 5 to be described later). Note that, in Fig. 3A, reference numeral 102 indicates a fastening member to fasten and fix the shield 61 to the stay member 101 (four fastening bolts in the present configuration).

As illustrated in Fig. 2, the shield 61 is supported on the upper part of the front cowl 54 with a clearance between them at the front. Hence, the shield 61 is away from the fundamental curved surface of the front cowl 54 and does not constitute a part of the fundamental curved surface.

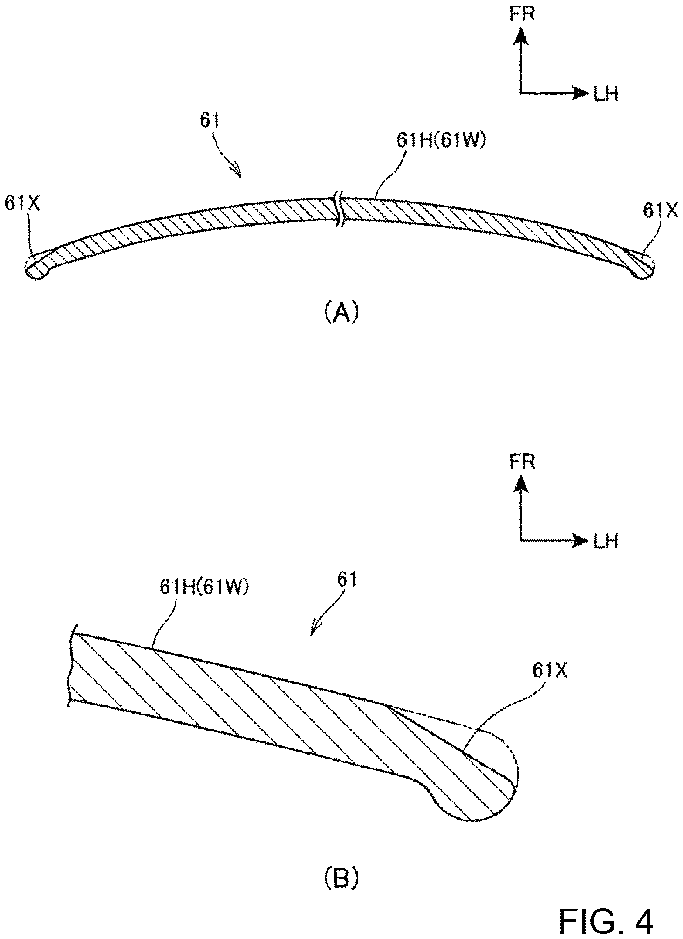

The shield 61 has the shape of a curve extending horizontally toward the rear and is formed in the shape of a slope tilting upward toward the rear, and is thus formed in a curved surface (hereinafter referred to as a "fundamental curved surface 61W of the shield 61") that causes a wind during traveling to flow to the left and right of the vehicle body. The fundamental curved surface 61W of the shield 61 is similar to the front cowl 54 in that it forms a forward-protruding curved surface in a top view (Fig. 4A to be described later); however, in a sectional side view, the fundamental curved surface is formed not in the shape of a forward-protruding curve like the front cowl 54 but in the shape of a straight line extending upward toward the rear. Note that the shield 61 and the front cowl 54 are formed symmetrically about the vehicle width-wise centre.

Since the shield 61 is separated from the fundamental curved surface 61W of the front cowl 54 and tilts upward toward the rear, the shield 61 can be disposed to reach a high position. Thereby, it is possible to cover the front side of the rider sitting behind the front cowl 54 with the shield 61 without forcing the rider to largely lean forward and thus to easily achieve a high windbreak effect, which is suitable for a long distance driving.

More specifically, in a front view of the vehicle body as illustrated in Fig. 3A, the shield 61 is made as a relatively large shield 61 having a vertical length longer than a horizontal length in the vehicle width-wise direction. As illustrated in Fig. 2, a lower edge of the shield 61 is located below an upper edge of the front cowl 54 and the handlebar 26, and an upper edge of the shield 61 is located above the handlebar 26, which makes it possible to broadly cover the upper body of an occupant behind the shield 61. Note that a transparent resin material is used as a material of the shield 61.

As illustrated in Fig. 2 and Fig. 3A, notch portions 61A are formed in left and right side edges of the shield 61 by notching the side edges inward in the vehicle width-wise direction at a substantially middle position in the vertical direction. The left and right notch portions 61A define a shield narrow portion 61S being the narrowest in the vehicle width-wise direction.

In the shield 61, a shield lower portion 61L constituting a part under the shield narrow portion 61S is formed as a first wide portion being the widest, and a shield upper portion 61H being a part over the shield narrow portion 61S is formed as a second wide portion being the second widest after the shield lower portion 61L.

Owing to the shield narrow portion 61S, it is possible to secure a sufficient distance between the handlebar 26 and the shield 61 even when the amount of steering given to the handlebar 26 is large, and also reduce the frontal projected area of the shield 61.

In the meantime, during traveling, because of a traveling wind flowing from the front side along the shield 61, a traveling wind flowing toward the left and right of the shield 61 and a traveling wind flowing toward the upper side of the shield 61 are generated at a front surface of the shield 61.

Fig. 3B illustrates a shield 161 according to a reference example. In Fig. 3B, traveling winds flowing toward the left and right of the shield 161 are illustrated. The shield 161 is a shield made by removing shield recess portions 61X to be described below from the shield 61 according to the present configuration.

Focusing on traveling winds flowing toward the left and right of the shield 61, as illustrated in Fig. 3B, upper and lower traveling winds along the shield 61 are different in flow velocity; a faster wind W1 is generated in a lower part of the shield 61 and a slower wind W2 is generated in an upper part of the shield 61. The joining of these traveling winds W1, W2 different in flow velocity results in generation of a vortex W3. The vortex W3 causes wind noise and an increase in air resistance.

On the other hand, as illustrated in Fig. 3A, the shield 61 of this embodiment includes, at left and right parts of the shield 61, the recess portions 61X (hereinafter referred to as the "shield recess portions 61X") being recessed from the fundamental curved surface of the shield 61. The shield recess portions 61X introduce a part of a traveling wind, flowing along the fundamental curved surface 61W of the shield 61, into between the traveling winds W1, W2 different in flow velocity, and thereby make it possible to reduce the joining of the traveling winds W1, W2 and reduce the generation of the vortex W3.

More specifically, the shield recess portions 61X are arranged at left and right side edges of the shield upper portion 61H, namely, arranged in areas near left and right corner parts made between the shield upper portion 61H and the shield narrow portion 61S. In addition, the shield recess portions 61X have a vertically long shape extending in an upward direction along the left and right side edges of the shield 61, and each have the shape of a rearward-protruding recess being widened vertically toward the outside in the vehicle width-wise direction.

Fig. 4A is a sectional view taken along a line IV-IV in Fig. 3A, and Fig. 4B is an enlarged view of a cross section of the shield recess portion 61X illustrated in Fig. 4A.

As illustrated in Fig. 4A, the shield recess portions 61X are recess portions (61X) being recessed rearward from the fundamental curved surface 61W of the shield 61 at both left and right ends of the shield 61 and, as illustrated in Fig. 4B, the shield recess portions have a cross-sectional shape where front corner parts of the respective left and right side edges of the shield 61 are cut obliquely. Hence, the shield recess portions are each formed in the shape of an open groove which becomes deeper rearward toward the outside in the vehicle width-wise direction and whose outer side in the vehicle width-wise direction is open. Note that, in Fig. 4A and Fig. 4B, a chain double-dashed line indicates the outline of the shield in the case of no shield recess portions 61X.

In this way, since each shield recess portion 61X has the shape of a recess being widened vertically toward the outside in the vehicle width-wise direction, it is possible to spread vertically a traveling wind flowing along the shield recess portion 61X to make it flow more easily, and thus introduce the traveling wind into between the upper and lower traveling winds W1, W2 efficiently. Thereby, the joining of the traveling winds W1, W2 can be reduced efficiently.

Moreover, since the shield recess portion 61X has the shape of an open groove whose outer side in the vehicle width-wise direction is open, it does not block the flow of a travelling wind flowing along the shield recess portion 61X toward the outside in the vehicle width-wise direction. Thus, the joining of the traveling winds W1, W2 can be further reduced. In this manner, the generation of the vortex W3 between the traveling winds W1, W2 is reduced and the effect of rectifying the flow of the traveling winds is enhanced. In consequence, it is possible to suppress wind noise and suppress an increase in air resistance. Subsequently, the shield 61 and its peripheral configuration will be detailed more.

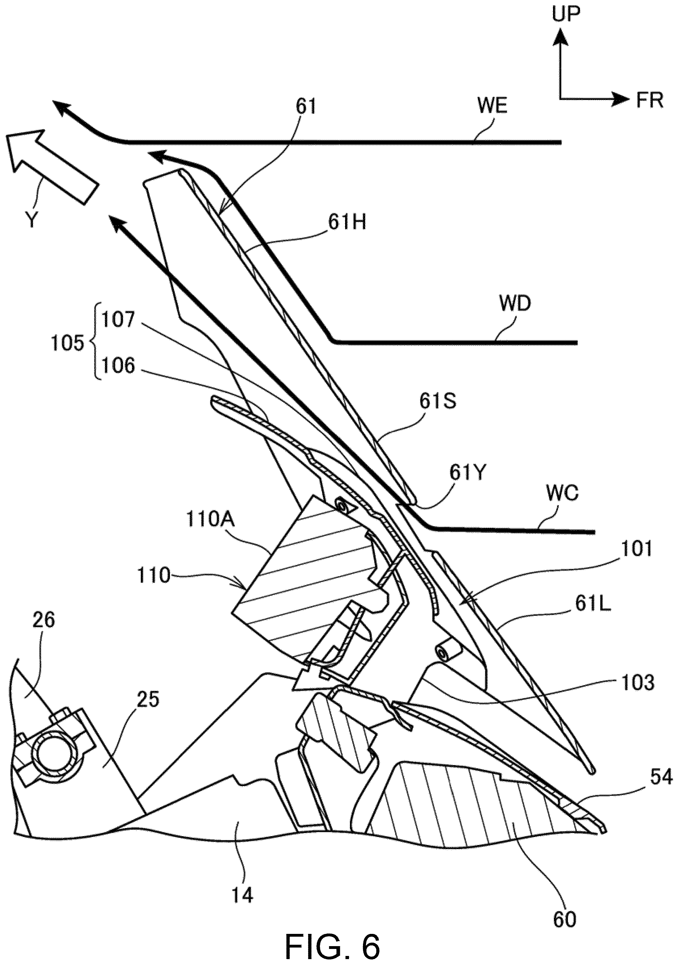

Fig. 5 is a perspective view in which the shield 61 and its peripheral configuration are viewed from the front right side. Note that, in Fig. 5, the shield 61 is illustrated in a chain double-dashed line for the sake of convenience. Fig. 6 is a sectional side view illustrating the shield 61 and its peripheral configuration. Fig. 6 illustrates a side cross section at the vehicle width-wise centre.

As illustrated in Fig. 5 and Fig. 6, the stay member 101 having a square U-shaped cross section and standing upward from the upper part of the front cowl 54 is attached between the front cowl 54 and the shield 61. The stay member 101 integrally includes: a pair of left and right standing portions 103 that stand upward from the upper part of the front cowl 54 while being spaced from each other in the vehicle width-wise direction; and a bridging plate portion 105 bridging upper parts of the pair of left and right standing portions 103, and a meter 110 is supported in an area surrounded by the pair of left and right standing portions 103 and the bridging plate portion 105. Thereby, the meter 110 is surrounded by the front cowl 54 and the stay member 101.

The meter 110 is a unit for displaying vehicle information such as a vehicle speed and an engine speed, and is disposed with a display surface 110A of the meter 110 directed obliquely rearward, that is, directed opposed to the rider.

The bridging plate portion 105 integrally includes: an inclined plate portion 106 extending upward toward the rear in an area between the pair of left and right standing portions 103; and a pair of left and right shield support portions 107 projecting forward and upward of the inclined plate portion 106 and extending upward toward the rear at the left and right of the inclined plate portion 106, and the shield 61 is fastened to front surfaces of the pair of left and right shield support portions 107 with multiple fastening members 102.

To put it another way, the stay member 101 serves not only as a meter cover covering the meter 110 and a meter stay supporting the meter 110 but also as a shield stay supporting the shield 61.

The inclined plate portion 106 covers an upper part of the meter 110 and extends further rearward and upward than the meter 110, and thereby serves as a meter visor to protect the meter 110 against the sun. In addition, the inclined plate portion 106 extends downward toward the front so as to cover an area behind a shield opening 61Y bored in the shield 61, and thus it also serves as a traveling wind guide to guide a traveling wind WC introduced through the shield opening 61Y toward the rear upper side, as illustrated in Fig. 6.

The shield opening 61Y is an opening bored at the centre of the shield 61. More specifically, the shield opening is provided at the vehicle width-wise centre of the shield 61 and at a substantially middle position in the vertical direction of the shield, and is formed as a horizontally long opening that is open in a front-rear direction throughout the width of the inclined plate portion 106.

Note that, in Fig. 6, reference sign WD indicates a traveling wind that flows toward the shield 61 and then flows obliquely upward along the front surface of the shield 61 at a position above the shield opening 61Y, and reference sign WE indicates a traveling wind that flows above the shield 61.

Suppose that no shield opening 61Y is provided in the shield 61, there would be an increase in air resistance which is unfavourable for improvement of fuel consumption. On the other hand, in the present configuration, since the shield opening 61Y is provided in the shield 61, a traveling wind from the front side (corresponding to the traveling wind WC) partially passes through the shield opening 61Y and air resistance can be reduced accordingly, which is favourable for improvement of fuel consumption.

In the case where no shield opening 61Y is provided in the shield 61, the traveling wind WD flowing upward along an upper surface of the shield 61 can bring about an effect of pushing upward the streamline of the traveling wind WE flowing above the shield 61 (a traveling wind push-up effect illustrated by reference sign Y in Fig. 6). On the other hand, in the present configuration, besides the traveling wind WD, the traveling wind WC that has entered the shield opening 61Y and flows along an upper surface of the inclined plate portion 106 as the meter visor can also push upward the streamline of the traveling wind WE flowing above the shield 61, as illustrated in Fig. 6. Consequently, as a traveling wind from the front side partially passes through the shield opening 61Y, air resistance can be reduced accordingly and thus fuel consumption can be improved on the one hand; and at the same time, the traveling wind push-up effect can be further enhanced accordingly, thus achieving a structure favourable for a reduction of the power of wind blowing against an occupant such as the rider.

In addition, because the air volume of the traveling wind W1 to flow to the left and right in the shield narrow portion 61S is reduced by the shield opening 61Y, it is possible to further suppress the joining of the traveling winds W1, W2 and thus further suppress wind noise and the like. Moreover, the traveling wind WC having entered the shield opening 61Y can be dispersed to the left and right through a pair of left and right openings 61Z that are bored in the inclined plate portion 106 as the meter visor while being spaced from each other in the vehicle width-wise direction. Owing to these, in the present configuration, it is possible to maintain turning performance while achieving the same windbreak effect as a taller shield.

As illustrated in Fig. 5, the pair of left and right openings 61Z (hereinafter referred to as "stay-side openings 61Z") is arranged above the shield opening 61Y in the inclined plate portion 106 while being spaced from each other in the vehicle width-wise direction. The stay-side openings 61Z are openings to cause the traveling wind W1 having entered the shield opening 61Y to flow outward in the vehicle width-wise direction.

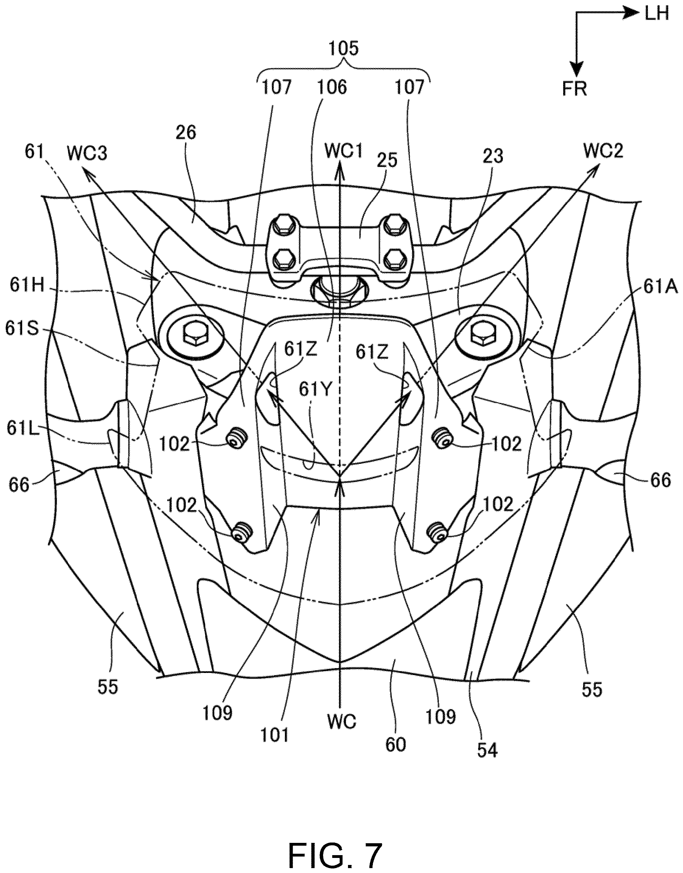

Fig. 7 is a view of the stay member 101 and its peripheral configuration viewed from the upper side. Note that, Fig. 7 also illustrates the shield 61 in a chain double-dashed line.

The pair of left and right stay-side openings 61Z is arranged in a pair of left and right wall portions 109 that connect steps between the inclined plate portion 106 and the pair of left and right shield support portions 107. The wall portions 109 are formed in inclined walls standing forward and upward from the inclined plate portion 106 and being stretched outward in the vehicle width-wise direction toward the front upper side. Since the stay-side openings 61Z are open in the wall portions 109 being inclined walls, the stay-side openings 61Z are openings being open in the vehicle width-wise (horizontal) direction in the bridging plate portion 105.

Since the stay-side openings 61Z are open horizontally, as illustrated in Fig. 7, the traveling wind WC having entered the shield opening 61Y can be split into three, i.e., a traveling wind WC1 flowing between the left and right stay-side openings 61Z and traveling winds WC2, WC3 flowing through the respective left and right stay-side openings 61Z.

Thereby, it is possible to actively produce not only an upward flow but also horizontal flows. These horizontal flows can reduce the gap in flow velocity with traveling winds flowing at the left and right of the shield 61 and thus suppress generation of vortices at the lateral sides of an occupant, enabling a reduction of the power of wind blowing against the arms of the rider and the like.

Further, the following effect can be obtained. Specifically, if a traveling wind is just made to flow upward through the shield opening 61Y, the traveling wind may be still retained at the vehicle width-wise centre and this may degrade the turning performance; however, since the traveling wind is also dispersed horizontally, this is also favourable for enhancement in turning performance.

As has been described above, according to this embodiment, the shield 61 that is provided on the upper part of the front cowl 54 with a clearance between them is formed along the fundamental curved surface 61W that causes a wind during traveling to flow to the left and right of the vehicle body, and the shield recess portions 61X being recessed from the fundamental curved surface 61W are arranged at the left and right parts of the shield 61. Thereby, it is possible to introduce a traveling wind into between the upper and lower traveling winds W1, W2 that are located at the left and right parts of the shield 61 and different in flow velocity, and thus reduce the joining of the traveling winds W1, W2. This facilitates suppression of wind noise and suppression of an increase in air resistance, and thus facilitates improvement in aerodynamic characteristics.

Further, the shield 61 is provided with the shield narrow portion 61S where the shield is narrowed in the vehicle width-wise direction by the notch portions 61A formed by notching the shield inward in the vehicle width-wise direction, and the shield recess portions 61X are located above the notch portions 61A. Thus, it is possible to reduce the joining of the upper and lower traveling winds W1, W2 that are located at the left and right of the notch portions 61A and different in flow velocity. In this case, wind noise at a relatively high position can be suppressed, and thus wind noise that is likely to reach an occupant can be suppressed efficiently.

Further, the shield 61 has the shield opening 61Y being open at the vehicle width-wise centre in the shield narrow portion 61S. Thus, the air volume of the traveling wind W1 to flow to the left and right from the shield narrow portion 61S is reduced and the joining of the traveling winds W1, W2 can be further suppressed accordingly, which further facilitates suppression of wind noise and the like. Moreover, a traveling wind from the front side partially passes through the shield opening 61Y, and air resistance can be reduced accordingly. Thereby, it is possible to achieve a structure favourable for a reduction of the power of wind blowing against an occupant such as the rider as well as improve fuel consumption.

Further, the shield 61 is supported by the stay member 101 serving as, for example, a meter stay supporting the meter 110, and the stay member 101 integrally includes the inclined plate portion 106 serving as a meter visor covering the meter 110 from above. Thus, the stay member 101 has the function to support the meter 110, the function as the meter visor, and the function to support the shield 61. This can reduce the number of components as compared to the case where these functions are implemented by separate components.

Further, the stay member 101 is located behind the shield opening 61Y, and an upper surface of the stay member 101 is formed in a shape that causes a wind having flowed through the shield opening 61Y to flow upward. Thus, besides the traveling wind WD flowing upward along the upper surface of the shield 61, the traveling wind WC flowing along the upper surface of the stay member 101 can also push upward the streamline of the traveling wind WE flowing above the shield 61. Thereby, the effect of pushing upward the traveling wind WE flowing above the shield 61 can be further enhanced, achieving the same windbreak effect as a taller shield.

Further, the stay-side openings 61Z to cause a wind having flowed through the shield opening 61Y to flow to the left and right are arranged at left and right parts of the stay member 101. Thus, a wind having flowed through the shield opening 61Y is dispersed to the left and right, which can reduce the power of wind blowing against the arms of the rider and the like and enhance turning performance. Owing to these, it is possible to maintain turning performance while achieving the same windbreak effect as a taller shield.

The above embodiment is merely one mode of the present invention, and any modifications and variations are possible without departing from the scope of the appended claims.

For example, the above embodiment describes the case where the present invention is applied to the motorcycle 1 illustrated in Fig. 1. However, not limited thereto, the present invention may be applied to other publicly-known straddle-type vehicles. Note that the straddle-type vehicles encompass all kinds of vehicles on which a rider rides by straddling a vehicle body, and includes not only motorcycles (including motor bicycles) but also three-wheeled vehicles and four-wheeled vehicles such as all-terrain vehicles (ATVs).

### Main Reference Numerals

- 1: MOTORCYCLE (STRADDLE-TYPE VEHICLE)
- F: BODY FRAME
- 14: HEAD PIPE
- 54: FRONT COWL (COVER COVERING FRONT PART OF VEHICLE BODY)
- 61: SHIELD
- 61A: NOTCH PORTION
- 61H: SHIELD UPPER PORTION
- 61L: SHIELD LOWER PORTION
- 61S: SHIELD NARROW PORTION
- 61W: FUNDAMENTAL CURVED SURFACE OF SHIELD
- 61X: SHIELD RECESS PORTION
- 61Y: SHIELD OPENING
- 61Z: STAY-SIDE OPENING
- 101: STAY MEMBER (METER STAY, SHIELD STAY)
- 106: INCLINED PLATE PORTION (METER VISOR)
- 110: METER

## Claims

1. A front structure for a straddle-type vehicle including: a cover (54) covering a front part of a vehicle body; and a shield (61) provided on an upper part of said cover (54) with a clearance therebetween, wherein
said shield (61) is formed along a fundamental curved surface (61W) that causes a wind during traveling to flow to the left and right of the vehicle body,
said shield (61) is supported by a meter stay (101) supporting a meter (110),
said meter stay (101) integrally includes a meter visor (106) covering said meter (110) from above, and is located behind said shield opening (61Y), and
an upper surface of said meter stay (101) is formed in a shape that causes a wind having flowed through a shield opening (61Y) to flow upward;
the front structure being **characterized in that**
said shield (61) is provided with a narrow portion (61S) where said shield is narrowed in a vehicle width-wise direction by notch portions (61A) formed by notching said shield inward in the vehicle width-wise direction,
said shield (61) has a shield opening (61Y) being open at a vehicle width-wise centre in said narrow portion (61S),
recess portions (61X) recessed from said fundamental curved surface (61W) are arranged at left and right parts of said shield (61), and **in that** stay-side openings (61Z) to cause a wind having flowed through said shield opening (61Y) to flow to the left and right are arranged at left and right parts of said meter stay (101), and that
said recess portions (61X) are located above said notch portions (61A).

## Patentansprüche

1. Vorderstruktur für ein Grätschsitztyp-Fahrzeug, mit: einer Abdeckung (54), die einen vorderen Teil einer Fahrzeugkarosserie bedeckt; und einem Schutzschild (61), das an einem oberen Teil der Abdeckung (54) mit einem Freiraum dazwischen vorgesehen ist, bei der
das Schutzschild (61) entlang einer gebogenen Grundfläche (61W) ausgebildet ist, die bewirkt, dass ein Wind während einem Fahren nach links und rechts der Fahrzeugkarosserie strömt,
das Schutzschild (61) von einem Zählerständer (101), der einen Zähler (110) abstützt, gestützt wird,
der Zählerständer (101) integral einen Zählerschirm (106), der den Zähler (110) von oben bedeckt, aufweist und sich hinter der Schutzschildöffnung (61Y) befindet, und
eine obere Fläche des Zählerständers (101) in einer Form ausgebildet ist, die bewirkt, dass ein Wind, der durch eine Schildöffnung (61Y) geströmt ist, nach oben strömt;
wobei die Vorderstruktur **dadurch gekennzeichnet ist, dass**
das Schutzschild (61) mit einem engen Bereich (61S) versehen ist, wo das Schutzschild in einer Fahrzeugbreitenrichtung durch Einkerbungsbereiche (61A) verengt ist, die durch Einkerben des Schutzschildes in der Fahrzeugbreitenrichtung nach innen ausgebildet sind,
das Schutzschild (61) eine Schildöffnung (61Y) aufweist, die in einer fahrzeugbreitenweisen Mitte in dem verengten Bereich (61S) offen ist,
Aussparungsbereiche (61X), die von der gekrümmten Grundfläche (61W) ausgespart sind, an einem linken und rechten Teil des Schutzschilds (61) angeordnet sind und dass ständerseitige Öffnungen (61Z) zum Bewirken, dass ein Wind durch die Schildöffnung (61Y) zum Strömen nach links und rechts hindurchströmt, an einem linken und rechten Teil des Zählerständers (101) angeordnet sind, und dass
die Aussparungsbereiche (61X) sich oberhalb der Einkerbungsbereiche (61A) befinden.

## Revendications

1. Structure avant pour un véhicule de type cavalier incluant : un couvercle (54) couvrant une partie avant d'un corps de véhicule ; et un écran (61) prévu sur une partie supérieure dudit couvercle (54) avec un espacement entre eux, dans laquelle
ledit écran (61) est formé le long d'une surface courbée fondamentale (61W) qui entraîne un vent pendant son déplacement à circuler vers la gauche et la droite du corps de véhicule,
ledit écran (61) est supporté par un support de compteur (101) supportant un compteur (110),
ledit support de compteur (101) inclut d'un seul tenant une visière de compteur (106) couvrant ledit compteur (110) de dessus, et est situé derrière ladite ouverture d'écran (61Y), et
une surface supérieure dudit support de compteur (101) est formée dans une forme qui entraîne un vent ayant circulé au travers d'une ouverture d'écran (61Y) à circuler vers le haut ;
la structure avant étant **caractérisée en ce que**
ledit écran (61) est doté d'une portion étroite (61S) où ledit écran est rétréci dans une direction dans le sens de la largeur du véhicule par des portions d'encoche (61A) formées par encochage dudit écran vers l'intérieur dans la direction dans le sens de la largeur du véhicule,
ledit écran (61) présente une ouverture d'écran (61Y) qui est ouverte sur un centre dans le sens de la largeur du véhicule dans ladite portion étroite (61S),
des portions d'évidement (61X) évidées dans ladite surface courbée fondamentale (61W) sont agencées aux parties gauche et droite dudit écran (61), et **en ce que** des ouvertures côté support (61Z) destinées à entraîner un vent ayant circulé au travers de ladite ouverture d'écran (61Y) à circuler à gauche et à droite sont agencées aux parties gauche et droite dudit support de compteur (101), et que
lesdites portions d'évidement (61X) sont situées au-dessus desdites portions d'encoche (61A).
